**Europäisches Patentamt**

**European Patent Office**

**Office européen des brevets**

(19)

(11) **EP 1 505 609 A1**

(12) **EUROPEAN PATENT APPLICATION**
published in accordance with Art. 158(3) EPC

(43) Date of publication:
**09.02.2005 Bulletin 2005/06**

(51) Int Cl.[7]: **H01F 10/16**, G11B 5/31

(21) Application number: **03723307.9**

(86) International application number:
**PCT/JP2003/005846**

(22) Date of filing: **09.05.2003**

(87) International publication number:
**WO 2003/096359 (20.11.2003 Gazette 2003/47)**

(84) Designated Contracting States:
**AT BE BG CH CY CZ DE DK EE ES FI FR GB GR HU IE IT LI LU MC NL PT RO SE SI SK TR**

(30) Priority: **10.05.2002 JP 2002136100**
**10.05.2002 JP 2002136101**

(71) Applicant: **Japan Science and Technology Agency**
**Kawaguchi-shi, Saitama 332-0012 (JP)**

(72) Inventors:
• **SHINTAKU, Kazuhiko**
**Akita-shi, Akita 010-1413 (JP)**
• **YAMAKAWA, Kiyoshi**
**Akita-shi, Akita 010-0966 (JP)**

(74) Representative: **Hertz, Oliver, Dr.**
**v. Bezold & Sozien,**
**Akademiestrasse 7**
**80799 München (DE)**

(54) **SOFT MAGNETIC MATERIAL OF HIGH SATURATION MAGNETIC FLUX DENSITY**

(57)    A high saturation magnetic flux density soft magnetic material has a stacked film of a non-crystalline underlayer formed of a soft magnetic material and a film with a composition expressed by the following general formula

$$(Fe_xCo_{1-x})_y(M)_{1-y},$$

where $0.65 \leqq x \leqq 0.75$, $0 < 1-y \leqq 0.05$, and M denotes at least one species selected form the group consisting of oxides and nitrides of Mg, Al, Si and Ti.

FIG.1

EP 1 505 609 A1

**Description**

Technical Field

The present invention relates to a high saturation flux density soft magnetic material, in particular, to a high saturation flux density soft magnetic material that can be suitably used as a core material of a magnetic head capable of coping with a recording medium with a high coercivity.

Background Art

With the increase of capacity and recording speed for information recording, prominent progress has been achieved in information storage devices in recent years. In particular, a hard disc with a high capacity and a high recording speed, excellent in reliability, and capable of overwriting information has established a firm position as an information storage device. However, with the increase of recording density derived from the increase of capacity, the coercivity of a recording medium tends to be increased. Thus, a soft magnetic film with a high saturation flux density is required for a core material of the magnetic head for recording information on the recording medium with such a high coercivity.

A high saturation flux density is required first for the soft magnetic film used for a magnetic head core material. Recently, a soft magnetic film with a saturation flux density of 2.2T or more is being vigorously studied. $Fe_xCo_{1-x}$, where $0.65 \leqq x \leqq 0.75$, is promising as a material exhibiting such a high saturation flux density. It is known that the FeCo alloy of the particular composition exhibits a high saturation flux density of 2.4T or more. However, where the FeCo alloy of the particular composition is formed into a thin film by ordinary sputtering, the thin film exhibits a coercivity of 50 to 100 Oe, which makes it impossible to use the thin film as the core material of the magnetic head.

Therefore, it is important to decrease the coercivity in the hard axis direction without greatly decreasing the saturation flux density of the FeCo alloy.

In order to decrease the coercivity of the FeCo alloy, conventionally known is a method in which an alloy target formed of FeCo and a third component added thereto or a composite formed of a FeCo target and a chip of a third component disposed thereon is used and reactive sputtering is carried out under argon gas containing about several percent of additive gas such as nitrogen gas or oxygen gas. The third component is of a material that is likely to bond selectively with the additive gas and serves to prevent Fe or Co from being affected by the additive gas. In this method, however, it was impossible to obtain satisfactory soft magnetic properties unless 5% or more of the third component other than FeCo is added. Under the circumstances, the deposited film inevitably had a markedly decreased saturation flux density.

As another method, it is reported that the soft magnetic properties are improved by stacking a FeCo-based alloy film on an approximately 5 nm-thick underlayer formed of a soft magnetic material. However, the range of the thickness of the FeCo-based alloy film that can be stacked in such a structure is not so wide and the underlayer is required to have a certain extent of the thickness and therefore the effective saturation magnetic flux density of the entire film is decreased.

Incidentally, as the soft magnetic material for the underlayer, a NiFe alloy (referred to as Permalloy in general) is often used. In this case, the crystal structure of the FeCo-based alloy film is controlled depending on the crystal structure of the NiFe-based underlayer to improve the soft magnetic properties of the FeCo-based alloy film. Since the crystal structure of the NiFe-based underlayer is affected by a substrate, the soft magnetic properties of the FeCo-based alloy film may not be improved sufficiently, depending on the substrate to be used. Therefore, it is required an underlayer whose effect to improve the soft magnetic properties of the FeCo-based alloy film is hardly affected by the state of the substrate.

Further, the domain control of the recording head has also become important and, thus, a high anisotropy field has come to be required.

In addition to the improvement in the magnetic properties described above, it is preferable that stable magnetic properties can be provided over a wide range of thickness in order to facilitate the design of the magnetic head.

Disclosure of Invention

An object of the present invention is to provide a high saturation flux density soft magnetic material with a high saturation flux density, a low coercivity and a high anisotropy field, and suitable for a core material of a magnetic head.

A high saturation flux density soft magnetic material according to one aspect of the present invention comprises a stacked film of an underlayer formed of a NiFe-based soft magnetic material and a film with a composition expressed by the following general formula:

$$(Fe_xCo_{1-x})_y(Al_2O_3)_{1-y},$$

where $0.65 \leqq x \leqq 0.75$, and $0 < 1-y \leqq 0.03$.

In the above high saturation magnetic flux density soft magnetic material, it is preferable for the thickness of the NiFe-based underlayer to have a thickness of 0.5 to 5 nm and for the $(Fe_xCo_{1-x})_y(Al_2O_3)_{1-y}$ film to have a thickness of 50 to 1,000 nm.

A high saturation magnetic flux density soft magnetic material according to another aspect of the present invention comprises a stacked film of a non-crystalline underlayer formed of a soft magnetic material and a film with a composition expressed by the following general formula:

$$(Fe_xCo_{1-x})_y(M)_{1-y},$$

where $0.65 \leqq x \leqq 0.75$, $0 < 1-y \leqq 0.05$, and M denotes at least one species selected form the group consisting of oxides and nitrides of Mg, Al, Si and Ti.

In the above high saturation magnetic flux density soft magnetic material, it is preferable for the non-crystalline underlayer to have a thickness of 0.5 to 5 nm and for the $(Fe_xCo_{1-x})_y(M)_{1-y}$ film to have a thickness of 50 to 1,000 nm.

Materials for the above non-crystalline underlayer include a CoZrNb alloy, a FeZrNb alloy, and a FeCoZrNb alloy.

Brief Description of Drawings

FIG. 1 is a cross-sectional view of a high saturation magnetic flux density soft magnetic material according to a first embodiment of the present invention;

FIG. 2 is a graph showing the magnetization curve of a stacked film of a NiFe underlayer and a $(Fe_{0.70}Co_{0.30})_{0.99}(Al_2O_3)_{0.01}$ film in Example 1;

FIG. 3 is a graph showing the magnetization curve of a $Fe_{0.70}Co_{0.30}$ film alone;

FIG. 4 is a graph showing the magnetization curve of a $(Fe_{0.70}Co_{0.30})_{0.99}(Al_2O_3)_{0.01}$ film alone;

FIG. 5 is a graph showing a relationship between the coercivity in the hard axis direction and the thickness of the $(Fe_{0.70}Co_{0.30})_{0.99}(Al_2O_3)_{0.01}$ film for the stacked films in Example 2;

FIG. 6 is a graph showing a relationship between the coercivity in the hard axis direction and the thickness of the NiFe underlayer for the stacked films in Example 3;

FIG. 7 is a graph showing relationships between the saturation magnetic flux density as well as the coercivity in the hard axis direction and the $Al_2O_3$ content for the stacked films according to Example 4;

FIG. 8 is a cross-sectional view of a high saturation magnetic flux density soft magnetic material according to a second embodiment according to the present invention;

FIG. 9 is a graph showing the magnetization curve of a stacked film of a CoZrNb underlayer and a $(Fe_{0.70}Co_{0.30})_{0.99}(Al_2O_3)_{0.01}$ film in Example 5;

FIG. 10 is a graph showing a relationship between the coercivity in the hard axis direction and the thickness of the $(Fe_{0.70}Co_{0.30})_{0.99}(Al_2O_3)_{0.01}$ film for the stacked films in Example 6;

FIG. 11 is a graph showing a relationship between the coercivity in the hard axis direction and the thickness of the CoZrNb underlayer for the stacked films in Example 7; and

FIG. 12 is a graph showing relationships between the saturation magnetic flux density as well as the coercivity in the hard axis direction and the $Al_2O_3$ content for the stacked films in Example 8.

Best Mode for Carrying Out the Invention

The high saturation flux density soft magnetic material according to the present invention will now be described in more detail.

In the high saturation magnetic flux density soft magnetic material according to the first embodiment of the present invention, the underlayer is formed of a NiFe-based soft magnetic material (referred to as Permalloy in general). For the underlayer, a soft magnetic material containing another material in addition to Ni and Fe may be used as long as the material does not deteriorate desirable soft magnetic properties.

In the first embodiment of the present invention, the high saturation magnetic flux density soft magnetic film to be stacked on the NiFe-based underlayer contain $Fe_xCo_{1-x}$, where $0.65 \leqq x \leqq 0.75$, as a main component. It is known that the saturation flux density of a FeCo alloy with an appropriate composition can be increased to reach 2.45T, which is the highest value obtained in the alloy system, by adjusting a sputtering target, deposition conditions, and so on. The FeCo alloy in a composition range represented by $Fe_xCo_{1-x}$, where $0.65 \leqq x \leqq 0.75$, exhibits a saturation flux density close to the value noted above. In the first embodiment of the present invention, a high saturation magnetic flux density soft magnetic film formed of a composite material containing 3% or less of $Al_2O_3$ in $Fe_xCo_{1-x}$, where $0.65 \leqq x \leqq 0.75$, is used. The $Al_2O_3$ content preferably falls within the range of 0.5% to 3%. If the $Al_2O_3$ content is less than 0.5%, the coercivity in the hard axis direction tends to be increased. If the $Al_2O_3$ content exceeds 3%, the saturation flux density tends to be decreased. It should be noted that the coercivity in the hard axis direction can be decreased to 5 Oe or less while the saturation magnetic flux density is maintained even if the $(Fe_xCo_{1-x})_y(Al_2O_3)_{1-y}$ composite film is formed on a substrate without an underlayer.

The high saturation magnetic flux density soft magnetic material according to the first embodiment of the invention exhibits a high saturation magnetic flux density and good soft magnetic properties, i.e., a saturation magnetic flux density of 2.37T or more, a coercivity in the hard axis direction of 1 Oe or less, and an anisotropic magnetic field of 20 Oe or more, by stacking the $(Fe_xCo_{1-x})_y(Al_2O_3)_{1-y}$ film on the NiFe-based soft magnetic underlayer.

Since the high saturation flux density soft magnetic film according to the first embodiment of the present invention exhibits a high saturation flux density, where the film is used as a core material of a magnetic head, it makes easy to write information to a recording medium with a high coercivity and it is also possible to form stable magnetic domains in the recording medium so as to improve the quality of read signals.

With respect to the high saturation magnetic flux density soft magnetic material according to the first embodiment of the present invention, the reason why the thicknesses should preferably be 0.5 to 5 nm for the underlayer and 50 to 1,000 nm for the $(Fe_xCo_{1-x})_y(Al_2O_3)_{1-y}$ film is that the coercivity in the hard axis direction is decreased to 1 Oe or less if the thicknesses thereof are in the above ranges, respectively. Since the desired magnetic properties can be given for wide thickness ranges as described above, a design margin and a production margin of a magnetic head can be improved. It should be note that the ratio of the thickness of the underlayer in the entire thickness is preferred to be low and the thickness of the underlayer is preferably 5% or less, more preferably 1% or less, based on the entire thickness.

In the first embodiment of the present invention, the $(Fe_xCo_{1-x})_y(Al_2O_3)_{1-y}$ film can be formed by sputtering. To be more specific, it is possible to employ any of methods given below:

1) Sputtering is performed by using a sintered target of a FeCo alloy containing 3% or less of $Al_2O_3$.
2) Co-sputtering is performed by using a FeCo alloy target and an $Al_2O_3$ target.
3) Sputtering is performed by using a composite target formed of a FeCo alloy target and an $Al_2O_3$ chip disposed thereon.

Incidentally, in the high saturation flux density soft magnetic film according to the present invention, it is possible that the Al-O component deviates from the stoichiometric composition depending on manufacturing conditions. That is, although the high saturation flux density soft magnetic film according to the present invention must be represented by the formula $(Fe_xCo_{1-x})_y(Al_2O_3)_{1-y}$ in view of the target composition, it is possible that the film actually deposited may have a composition represented by the formula:

$$(Fe_xCo_{1-x})_y(Al_2O_z)_{1-y},$$

where $0.65 \leqq x \leqq 0.75$, $0 < 1-y \leqq 0.03$, and $1 \leqq z \leqq 8$.

If the sputtering conditions are once determined, a high saturation flux density soft magnetic material with desired magnetic properties can be stably manufactured thereafter.

In the high saturation magnetic flux density soft magnetic material according to the second embodiment of the present invention, a non-crystalline underlayer made of a soft magnetic material is used the underlayer. Specific examples of the non-crystalline underlayer include a CoZrNb alloy, a FeZrNb alloy, and a FeCoZrNb alloy. An underlayer formed of a material containing another material in the above alloy may be used as long as the material can maintain the non-crystalline structure and does not deteriorate desirable soft magnetic properties.

In the second embodiment of the present invention, a soft magnetic film formed of a composite material with a composition of $Fe_xCo_{1-x}$, where $0.65 \leqq x \leqq 0.75$, containing 5% or less of M which denotes at least one of oxides and nitrides of Mg, Al, Si and Ti is stacked on the non-crystalline underlayer. The M content preferably falls within the range of 0.5 to 5%. If the M content is less than 0.5%, the coercivity in the hard axis direction tends to be increased. If the M content exceeds 5%, the saturation magnetic flux density tends to be decreased.

The high saturation magnetic flux density soft magnetic material according to the second embodiment of the invention exhibits a high saturation magnetic flux density and good soft magnetic properties, i.e., a saturation magnetic flux density of 2.3T or more, a coercivity in the hard axis direction of 2 Oe or less, and an anisotropic magnetic field of 20 Oe or more, by stacking the $(Fe_xCo_{1-x})_y(M)_{1-y}$ film on the non-crystalline underlayer.

Since the high saturation flux density soft magnetic film according to the second embodiment of the present invention exhibits a high saturation flux density, where the film is used as a core material of a magnetic head, it makes easy to write information to a recording medium with a high coercivity and it is also possible to form stable magnetic domains in the recording medium so as to improve the quality of read signals. Further, since the non-crystalline underlayer is used, the $(Fe_xCo_{1-x})_y(M)_{1-y}$ film is hardly affected by the state of a substrate and good soft magnetic properties can be given stably.

With respect to the high saturation magnetic flux density soft magnetic material according to the second embodiment of the present invention, the reason why the thicknesses should preferably be 0.5 to 5 nm for the underlayer and 50 to 1,000 nm for the $(Fe_xCo_{1-x})_y(M)_{1-y}$ film is that the coercivity in the hard axis direction is decreased to 2 Oe or less if the thicknesses thereof are in the above ranges, respectively. Since the desired magnetic properties can be given for wide thickness ranges as described above, a design margin and a production margin of a magnetic head can be improved. It should be note that the ratio of the thickness of the underlayer in the entire thickness is preferred to be low and the thickness of the underlayer is preferably 5% or less, more preferably 1% or less, based on the entire thickness.

In the second embodiment of the present invention, the $(Fe_xCo_{1-x})_y(M)_{1-y}$ film can be formed by sputtering. To be more specific, it is possible to employ any of methods given below:

1) Sputtering is performed by using a sintered target of a FeCo alloy containing 5% or less of M.
2) Co-sputtering is performed by using a FeCo alloy target and an M target.
3) Sputtering is performed by using a composite target formed of a FeCo alloy target and an M chip disposed thereon.

Also in this case, if the sputtering conditions are once determined, a high saturation flux density soft magnetic material with desired magnetic properties can be stably manufactured thereafter.

Examples

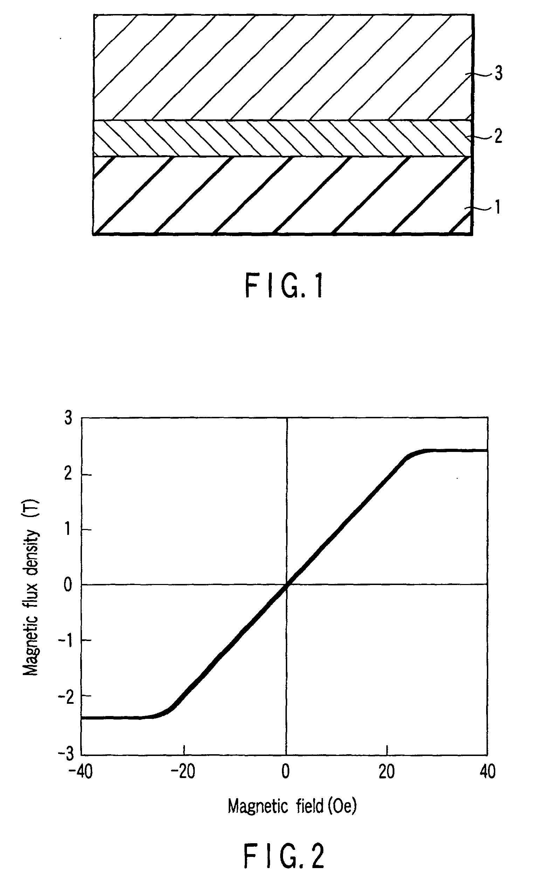

In the following Examples 1 to 4, high saturation magnetic flux density soft magnetic materials according to the first embodiment of the present invention, having the structure shown in FIG. 1 were manufactured. As shown in FIG. 1, on a substrate 1, a NiFe underlayer 2 and a FeCo-based film 3 are formed.

Example 1

Sintered bodies of $Ni_{0.80}Fe_{0.20}$ and $(Fe_{0.70}Co_{0.30})_{0.99}(Al_2O_3)_{0.01}$ each having a disc shape of a diameter of 100 mm and a thickness of 3 mm were used as targets. A silicon substrate of 10 mm-square and 1 mm-thick and having a silicon oxide film formed on the surface thereof was used as a substrate.

The above targets and the substrate were fixed about 75 mm apart from each other in the vacuum chamber of a six-target radio frequency magnetron sputtering apparatus (SPM-506 manufactured by Tokki Corporation). Also, in order to impart magnetic anisotropy to the soft magnetic film, a magnetic field more than 100 Oe was applied to the central portion of the substrate by using a permanent magnet.

The vacuum chamber was evacuated to $2 \times 10^{-5}$ Pa. Then, Ar gas was introduced into the vacuum chamber, and the gas flow rate was controlled to set up a pressure of 1 Pa. Radio frequency sputtering was performed under a discharge power of 400W and a discharge frequency of 13.56 MHz. An underlayer with a thickness of about 1 nm was deposited on a substrate by using the $Ni_{0.80}Fe_{0.20}$ alloy target, and then an $Al_2O_3$-containing FeCo-based film with a thickness of about 400 nm was deposited by using the $(Fe_{0.70}Co_{0.30})_{0.99}(Al_2O_3)_{0.01}$ alloy target.

As a Comparative Example, only a $Fe_{70}Co_{30}$ alloy target not containing $Al_2O_3$ was provided, and a $Fe_{70}Co_{30}$ film alone with a thickness of about 400 nm was deposited on a substrate by the procedures similar to those described above.

As a Reference, an $(Fe_{0.70}Co_{0.30})_{0.99}(Al_2O_3)_{0.01}$ film with a thickness of about 400 nm was deposited on a substrate without forming the NiFe underlayer by the procedures similar to those described above.

The properties of the FeCo-based films thus manufactured were evaluated. A vibrating sample magnetometer (VSM) was used for the measurements.

FIG. 2 shows a typical magnetization curve of the stacked film of the NiFe underlayer and the $(Fe_{0.70}Co_{0.30})_{0.99}(Al_2O_3)_{0.01}$ film. The saturation flux density was 2.42T, the coercivity in the hard axis direction was 0.2 Oe and the anisotropy field was 25 Oe, which exhibit a high saturation flux density and satisfactory soft magnetic properties.

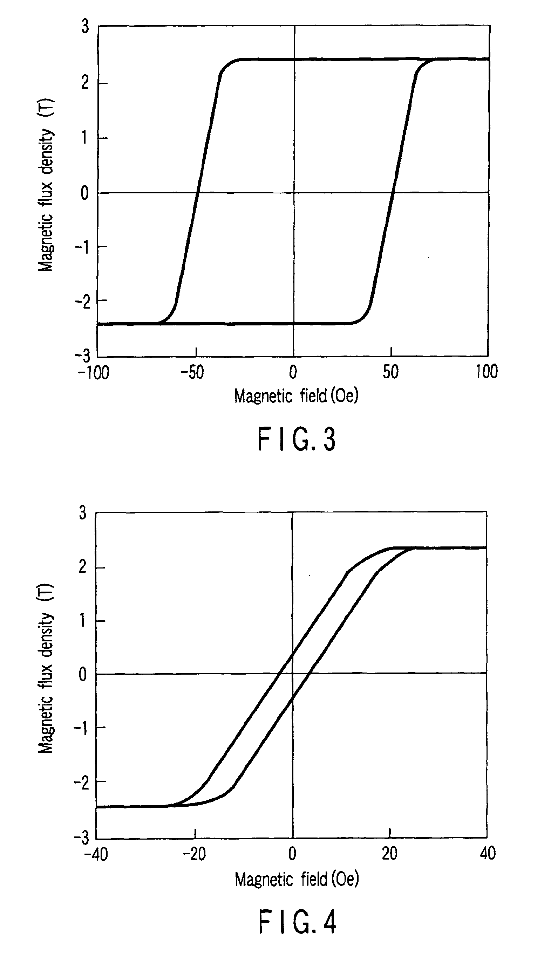

FIG. 3 shows a typical magnetization curve of the $Fe_{70}Co_{30}$ film alone. The saturation flux density was 2.45T and the coercivity in the hard axis direction was 50 Oe.

FIG. 4 shows a typical magnetization curve of the $(Fe_{0.70}Co_{0.30})_{0.99}(Al_2O_3)_{0.01}$ film alone. The saturation magnetic flux density was 2.42T and the coercivity in the hard axis direction was 3 Oe.

From the results of FIGS. 2 to 4, it is found that, in the stacked film of this Example, the soft magnetic properties of the FeCo-based film can be markedly improved by providing a thin NiFe underlayer.

Example 2

A $(Fe_{0.70}Co_{0.30})_{0.99}(Al_2O_3)_{0.01}$ film with a variously changed thickness was deposited on a NiFe underlayer with a fixed thickness of 1 nm formed on a substrate by the procedures similar to those in Example 1.

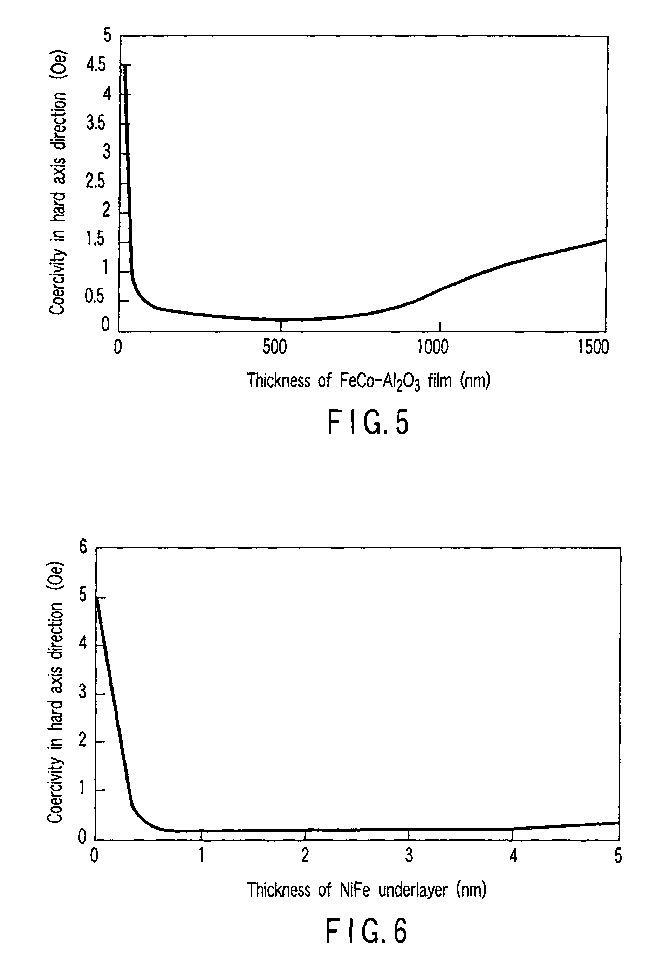

FIG. 5 shows the relationship between the coercivity in the hard axis direction and the thickness of the $(Fe_{0.70}Co_{0.30})_{0.99}(Al_2O_3)_{0.01}$ film for the resultant stacked films. It can be judged from FIG. 5 that, if the thickness of the $(Fe_{0.70}Co_{0.30})_{0.99}(Al_2O_3)_{0.01}$ film is in the range of 50 nm to 1,000 nm, the coercivity in the hard axis direction becomes 1 Oe or less.

Also, the saturation flux density was substantially constant, i.e., 2.42T, and the anisotropy field was 20 Oe or more in all the stacked films within the range shown in FIG. 5.

Example 3

A NiFe underlayer with a variously changed thickness was deposited on a substrate and a $(Fe_{0.70}Co_{0.30})_{0.99}(Al_2O_3)_{0.01}$ film with a fixed thickness of about 400 nm was deposited on the NiFe underlayer by the procedures similar to those in Example 1.

FIG. 6 shows the relationship between the coercivity in the hard axis direction and the thickness of the NiFe underlayer for the resultant stacked films. It can be judged from FIG. 6 that, if the thickness of the NiFe underlayer is in the range of 0.5 to 5 nm, the coercivity in hard axis direction becomes 1 Oe or less.

Also, the saturation flux density was substantially constant, i.e., 2.42T, and the anisotropy field was 20 Oe or more in all the stacked films within the range shown in FIG. 6.

Example 4

A FeCo-based film containing $Al_2O_3$ in variously changed content was deposited on a NiFe underlayer on a substrate by the procedures similar to those in Example 1, except that a sintered body of $(Fe_{0.70}Co_{0.30})_y(Al_2O_3)_{1-y}$, where $0.005 \leqq 1-y \leqq 0.04$, containing $Al_2O_3$ in variously changed content was used as a target.

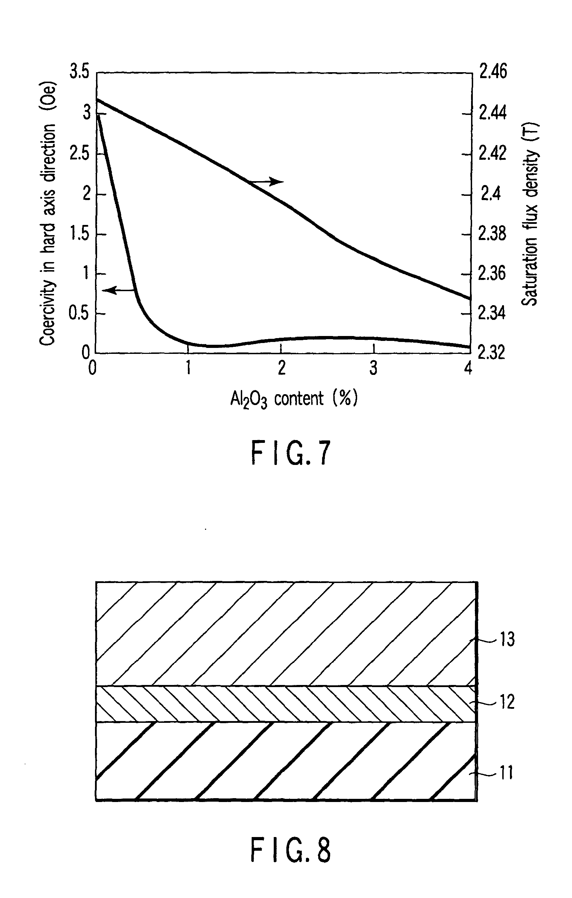

FIG. 7 shows the relationships between the saturation magnetic flux density as well as the coercivity in the hard axis direction and the $Al_2O_3$ content for the resultant stacked films. It can be judged from FIG. 7 that, if the $Al_2O_3$ content is in a range of 0.5 to 3%, the saturation flux density is 2.37T or more, and the coercivity in the hard axis direction is 1 Oe or less.

Also, the anisotropy field was 20 Oe or more in all the stacked films within the range shown in FIG. 7.

Incidentally, the description given above covers the case where 3% or less of $Al_2O_3$ is added to $Fe_xCo_{1-x}$, where $0.65 \leqq x \leqq 0.75$. However, it is also conceivable to use $SiO_2$, MgO or Ti-O as an additive compound in place of $Al_2O_3$.

In the following Examples 5 to 9, high saturation magnetic flux density soft magnetic materials according to the second embodiment of the present invention having the structure shown in FIG. 8 were manufactured. As shown in FIG. 8, on a substrate 11, a non-crystalline underlayer 12 and a FeCo-based film 13 are formed.

Example 5

Sintered bodies of $Co_{0.86}Zr_{0.05}Nb_{0.09}$ and $(Fe_{0.70}Co_{0.30})_{0.99}(Al_2O_3)_{0.01}$ each having a disc shape of a diameter of 100 mm and a thickness of 3 mm were used as targets. A silicon substrate of 10 mm-square and 1 mm-thick and having a silicon oxide film formed on the surface thereof was used as a substrate.

The above targets and the substrate were fixed about 75 mm apart from each other in the vacuum chamber of a six-target radio frequency magnetron sputtering apparatus (SPM-506 manufactured by Tokki Corporation). Also, in order to impart magnetic anisotropy to the soft magnetic film, a magnetic field more than 100 Oe was applied to the central portion of the substrate by using a permanent magnet.

The vacuum chamber was evacuated to $2 \times 10^{-5}$ Pa. Then, Ar gas was introduced into the vacuum chamber, and the gas flow rate was controlled to set up a pressure of 1 Pa. Radio frequency sputtering was performed under a discharge power of 400W and a discharge frequency of 13.56 MHz. An underlayer with a thickness of about 1 nm was deposited on a substrate by using the $Co_{0.86}Zr_{0.05}Nb_{0.09}$ alloy target, and then an $Al_2O_3$-containing FeCo-based film with a thickness of about 400 nm was deposited by using the $(Fe_{0.70}Co_{0.30})_{0.99}(Al_2O_3)_{0.01}$ alloy target.

In the same manner as Example 1, only a $Fe_{70}Co_{30}$ alloy film with a thickness of about 400 nm was deposited on a substrate for Comparative Example and an $(Fe_{0.70}Co_{0.30})_{0.99}(Al_2O_3)_{0.01}$ film with a thickness of about 400 nm was deposited on a substrate for Reference.

The properties of the FeCo-based films thus manufactured were evaluated. A vibrating sample magnetometer (VSM) was used for the measurements.

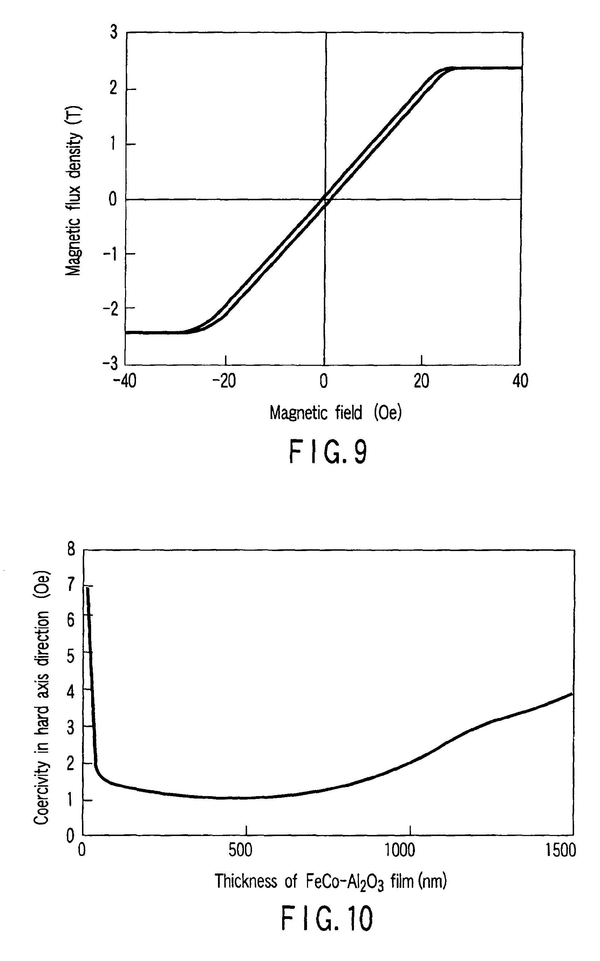

FIG. 9 shows a typical magnetization curve of a composite film of a CoZrNb underlayer and a $(Fe_{0.70}Co_{0.30})_{0.99}(Al_2O_3)_{0.01}$ film. The saturation magnetic flux density was 2.42T, the coercivity in the hard axis direction was 1 Oe, the anisotropic magnetic field was 25 Oe, which exhibit a high saturation flux density and satisfactory soft magnetic properties.

The typical magnetization curve of the film of the $Fe_{70}Co_{30}$ alone is as shown in FIG. 3, and the typical magnetization curve of the $(Fe_{0.70}Co_{0.30})_{0.99}(Al_2O_3)_{0.01}$ film alone is as shown in FIG. 4.

Based on the comparison of FIG. 9 with FIGS. 3 and 4, it is found that, in the stacked film of this Example, the soft magnetic properties of the FeCo-based film can be markedly improved by providing a thin CoZrNb underlayer.

Also, a stacked film of a CoZrNb underlayer and an $(Fe_{0.70}Co_{0.30})_{0.99}(Al_2O_3)_{0.01}$ film was formed by the procedures similar to those described above, except that a glass substrate was used in place of the silicon substrate. In this case, the stacked film formed on the glass substrate showed almost the same properties as those of the stacked film formed on the silicon substrate.

Further, a stacked film of a crystalline NiFe underlayer and a $(Fe_{0.70}Co_{0.30})_{0.99}(Al_2O_3)_{0.01}$ film was formed on a silicon substrate or a glass substrate. In this case, the stacked film on the glass substrate was found to have a coercivity in the hard axis direction two times as high as that of the stacked film on the silicon substrate.

It can be judged from these results that, owing to the use of the non-crystalline underlayer, the magnetic properties of the stacked films are hardly affected by the state of the substrate, which brings a great advantage.

Example 6

A $(Fe_{0.70}Co_{0.30})_{0.99}(Al_2O_3)_{0.01}$ film with a variously changed thickness was deposited on a CoZrNb underlayer with a fixed thickness of 1 nm formed on a substrate by the procedures similar to those in Example 5.

FIG. 10 shows the relationship between the coercivity in the hard axis direction and the thickness of the $(Fe_{0.70}Co_{0.30})_{0.99}(Al_2O_3)_{0.01}$ film for the resultant stacked films. It can be judged from FIG. 10 that, if the thickness of the $(Fe_{0.70}Co_{0.30})_{0.99}(Al_2O_3)_{0.01}$ film is in the range of 50 nm to 1,000 nm, the coercivity in the hard axis direction becomes 2 Oe or less.

Also, the saturation flux density was substantially constant, i.e., 2.42T, and the anisotropy field was 20 Oe or more in all the stacked films within the range shown in FIG. 10.

Example 7

A CoZrNb underlayer with a variously changed thickness was deposited on a substrate and a $(Fe_{0.70}Co_{0.30})_{0.99}(Al_2O_3)_{0.01}$ film with a fixed thickness of about 400 nm was deposited on the CoZrNb underlayer by the procedures similar to those in Example 5.

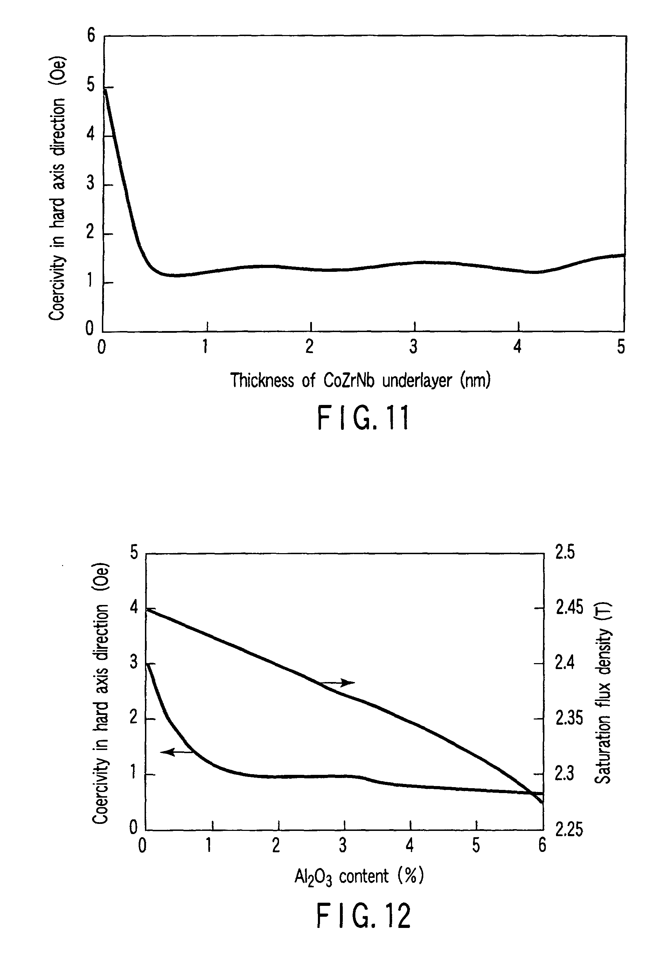

FIG. 11 shows the relationship between the coercivity in the hard axis direction and the thickness of the CoZrNb underlayer for the resultant stacked films. It can be judged from FIG. 11 that, if the thickness of the CoZrNb underlayer is in the range of 0.5 to 5 nm, the coercivity in hard axis direction becomes 1 Oe or less.

Also, the saturation flux density was substantially constant, i.e., 2.42T, and the anisotropy field was 20 Oe or more in all the stacked films within the range shown in FIG. 11.

Example 8

A FeCo-based film containing $Al_2O_3$ in variously changed content was deposited on a CoZrNb underlayer on a substrate by the procedures similar to those in Example 5, except that a sintered body of $(Fe_{0.70}Co_{0.30})_y(Al_2O_3)_{1-y}$, where $0.005 \leqq 1-y \leqq 0.06$, containing $Al_2O_3$ in variously changed content was used as a target.

FIG. 12 shows the relationships between the saturation magnetic flux density as well as the coercivity in the hard axis direction and the $Al_2O_3$ content for the resultant stacked films. It can be judged from FIG. 12 that, if the $Al_2O_3$ content is in a range of 0.5 to 3%, the saturation flux density is 2.3T or more, and the coercivity in the hard axis direction is 1 Oe or less.

Also, the anisotropy field was 20 Oe or more in all the stacked films within the range shown in FIG. 12.

Example 9

A $(Fe_{0.70}Co_{0.30})_{0.99}(M)_{0.01}$ film was deposited on a CoZrNb underlayer on a substrate by the procedures similar to those in Example 5, except that a sintered body expressed by $(Fe_{0.70}Co_{0.30})_{0.99}(M)_{0.01}$, where M was an oxide or nitride of Mg, Al, Si or Ti, was used as a target.

Table 1 shows the values of the saturation magnetic flux density (Bs), the coercivity in the hard axis direction (Hch), and the isotropic magnetic field (Hk) for the resultant stacked films.

It is found from Table 1 that, all the stacked films have the saturation magnetic flux density of 2.3T or more, the coercivity in the hard axis direction of 2 Oe or less, and the isotropic magnetic field of 20 Oe or more.

Also, if the M content is in a range of 0.5 to 5%, saturation magnetic flux density was 2.3T or more, the coercivity in the hard axis direction was 2 Oe or less, and the isotropic magnetic field was 20 Oe or more.

Table 1

| | Oxide | | | Nitride | | |
|---|---|---|---|---|---|---|
| | Bs (T) | Hch (Oe) | Hk(Oe) | Bs (T) | Hch (Oe) | Hk (Oe) |
| Mg | 2.4 | 1.2 | 25 | 2.4 | 1.2 | 22 |
| Al | 2.42 | 1 | 25 | 2.42 | 1 | 25 |
| Si | 2.41 | 1 | 25 | 2.41 | 1 | 25 |
| Ti | 2.4 | 1.1 | 24 | 2.4 | 1 | 21 |

Industrial Applicability

As described above in detail, since the high saturation flux density soft magnetic material according to the present invention has a high saturation flux density, in the case where the material is used as a core material of the magnetic head, it is possible to write information easily to a recording medium with a high coercivity and it is also possible to form stable magnetic domains in the recording medium so as to improve the quality of read signals. Also, since desired magnetic properties can be obtained over a wide range of thickness, it is possible to improve a design margin and a production margin of a magnetic head. Furthermore, in the case of using a non-crystalline underlayer, the stacked film is hardly affected with the state of a substrate, and therefore, excellent soft magnetic properties can be given stably.

**Claims**

1. A high saturation magnetic flux density soft magnetic material comprising a stacked film of an underlayer formed of a NiFe-based soft magnetic material and a film with a composition expressed by the following general formula:

$$(Fe_xCo_{1-x})_y(Al_2O_3)_{1-y},$$

where $0.65 \leqq x \leqq 0.75$, and $0 < 1-y \leqq 0.03$.

2. The high saturation magnetic flux density soft magnetic material according to claim 1, wherein the thickness of the NiFe-based underlayer is in a range of 0.5 to 5 nm and the thickness of the $(Fe_xCo_{1-x})_y(Al_2O_3)_{1-y}$ film is in a range of 50 to 1,000 nm.

3. A high saturation magnetic flux density soft magnetic material comprising a stacked film of a non-crystalline underlayer formed of a soft magnetic material and a film with a composition expressed by the following general formula:

$$(Fe_xCo_{1-x})_y(M)_{1-y},$$

where $0.65 \leqq x \leqq 0.75$, $0 < 1-y \leqq 0.05$, and M denotes at least one species selected form the group consisting of oxides and nitrides of Mg, Al, Si and Ti.

4. The high saturation magnetic flux density soft magnetic material according to claim 3, wherein the thickness of the non-crystalline underlayer is in a range of 0.5 to 5 nm and the thickness of the $(Fe_xCo_{1-x})_y(M)_{1-y}$ film is in a range of 50 to 1,000 nm.

5. The high saturation magnetic flux density soft magnetic material according to claim 3, wherein the non-crystalline underlayer is formed of a material selected from the group consisting of a CoZrNb alloy, a FeZrNb alloy and a FeCoZrNb alloy.

F I G. 1

F I G. 2

F I G. 3

F I G. 4

FIG. 5

FIG. 6

FIG. 7

FIG. 8

F I G. 9

Thickness of FeCo–$Al_2O_3$ film (nm)

F I G. 10

F I G. 11

F I G. 12

# INTERNATIONAL SEARCH REPORT

| International application No. |
|---|
| PCT/JP03/05846 |

**A. CLASSIFICATION OF SUBJECT MATTER**
Int.Cl$^7$ H01F10/16, G11B5/31

According to International Patent Classification (IPC) or to both national classification and IPC

**B. FIELDS SEARCHED**

Minimum documentation searched (classification system followed by classification symbols)
Int.Cl$^7$ H01F10/16, G11B5/31

Documentation searched other than minimum documentation to the extent that such documents are included in the fields searched

| | | | |
|---|---|---|---|
| Jitsuyo Shinan Koho | 1922–1996 | Toroku Jitsuyo Shinan Koho | 1994–2003 |
| Kokai Jitsuyo Shinan Koho | 1971–2003 | Jitsuyo Shinan Toroku Koho | 1996–2003 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6-318516 A (Mitsubishi Electric Corp.), 15 November, 1994 (15.11.94), Full text; Figs. 1 to 14 & US 5750251 A | 1-5 |
| Y | JP 2000-54083 A (Alps Electric Co., Ltd.), 22 February, 2000 (22.02.00), Full text; Figs. 1 to 9 (Family: none) | 1-5 |
| Y | JP 9-148132 A (Toshiba Corp.), 06 June, 1997 (06.06.97), Full text; Figs. 1 to 18 & US 6057049 A & EP 0717422 A & KR 0232667 A | 3-5 |

☒ Further documents are listed in the continuation of Box C.  ☐ See patent family annex.

| | |
|---|---|
| * Special categories of cited documents:<br>"A" document defining the general state of the art which is not considered to be of particular relevance<br>"E" earlier document but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>08 July, 2003 (08.07.03) | Date of mailing of the international search report<br>22 July, 2003 (22.07.03) |
| Name and mailing address of the ISA/<br>Japanese Patent Office | Authorized officer |
| Facsimile No. | Telephone No. |

Form PCT/ISA/210 (second sheet) (July 1998)

## INTERNATIONAL SEARCH REPORT

| | International application No. |
|---|---|
| | PCT/JP03/05846 |

**C (Continuation). DOCUMENTS CONSIDERED TO BE RELEVANT**

| Category* | Citation of document, with indication, where appropriate, of the relevant passages | Relevant to claim No. |
|---|---|---|
| Y | JP 10-65232 A  (Toshiba Corp.),<br>06 March, 1998 (06.03.98),<br>Full text; Figs. 1 to 4<br>& US 5949622 A          & US 6111729 A<br>& CN 1167310 A          & KR 0262282 B<br>& SG 0047223 A | 3-5 |

Form PCT/ISA/210 (continuation of second sheet) (July 1998)